# EUROPÄISCHE PATENTSCHRIFT

(11) **EP 1 054 203 B1**
(45) Veröffentlichungstag und Bekanntmachung des Hinweises auf die Patenterteilung: **21.01.2004**
(21) Anmeldenummer: 00108764.2
(22) Anmeldetag: 25.04.2000
(51) Int. Cl.: F16L 19/02

(54) **Rohrverschraubung**
Threaded joint
Raccord vissé

(30) Priorität: 17.05.1999 DE 29908670 U
(43) Veröffentlichungstag der Anmeldung: 22.11.2000
(73) Patentinhaber: Voss Fluid GmbH + Co. KG, 51688 Wipperfürth (DE)
(72) Erfinder: Hester, Hilmar, 51688 Wipperfürth (DE)
(74) Vertreter: Zapf, Christoph, Dipl.-Ing.

(56) Entgegenhaltungen:
- WO-A-85/02450
- DE-U- 9 320 306
- FR-A- 1 257 902
- US-A- 3 393 930

## Beschreibung

Die vorliegende Erfindung betrifft eine Rohrverschraubung zum Anschluß einer insbesondere metallischen Rohrleitung, bestehend aus einem Anschlußstutzen und einem zum Halten der Rohrleitung mit dem Anschlußstutzen verschraubbaren Überwurf-Verschraubungsteil, wobei der Anschlußstutzen eine Aufnahmeöffnung für die Rohrleitung mit einer radialen Stufenfläche zur axialen Abstützung der Rohrleitung aufweist, wobei die Rohrleitung einen umfangsgemäßen, durch Stauchumformen gebildeten Ringwulst aufweist, der zur formschlüssigen Halterung der Rohrleitung zwischen dem Anschlußstutzen und dem Verschraubungsteil gehalten ist, und wobei zwischen der Rohrleitung und dem Anschlußstutzen eine elastische Dichtung angeordnet ist.

Eine derartige Rohrverschraubung ist in der DE 195 20 099 A1 beschrieben. Dabei sind der Anschlußstutzen und das Verschraubungsteil als übliche Normteile einer Schneidringverschraubung ausgebildet. Dies bedeutet, daß der Anschlußstutzen einen inneren 24°-Konus aufweist, und das Verschraubungsteil ist als von der Rohrleitung durchgriffene Überwurfmutter mit einem inneren 45°-Konus ausgebildet. Die Rohrhalterung erfolgt aber nicht unter Verwendung eines mit den inneren Konen zusammenwirkenden Schneidrings, sondern die Rohrleitung weist einen äußeren Ringwulst auf, der zwischen den Verschraubungsteilen gehalten wird. Dabei ist bei dieser bekannten Rohrverschraubung der Ringwulst so geformt, daß er mit einer radial verlaufenden Anlageringfläche an einer Stirnfläche des Anschlußstutzens zur Anlage kommen soll. Ferner weist das Rohrende ausgehend von der radialen Anlagefläche des Ringwulstes ein entsprechend der Tiefe der Aufnahmeöffnung achsparalleles Endstück auf, dessen Stirnfläche im montierten Zustand auf der Stufenfläche im Anschlußstutzen aufliegen soll. Zwischen dem Stutzen-Innenkonus, dem achsparallelen Rohr-Endstück und der radialen Anlageringfläche des Rohrwulstes ist ein elastischer Dichtungsring angeordnet. Im praktischen Einsatz können bei dieser bekannten Rohrverschraubung Undichtigkeiten auftreten.

Eine ähnliche Rohrverbindung ist in der DE 195 11 063 A1 beschrieben. Dabei weist die Rohrleitung einen derart gestauchten, im Längsschnitt etwa konvex gewölbten Ringwulst auf, das dieser Spannflächen bildet, die unmittelbar in Anlagekontakt in einem Stutzen-Innenkonus und einem Innenkonus einer Überwurfmutter gelangen sollen. Dadurch soll in den meisten Ausführungsformen eine ausschließlich metallische Abdichtung erreicht werden. Eine zusätzliche elastische Abdichtung ist nur in einigen Ausführungen vorgesehen, und zwar entweder im Bereich eines Stutzen-Innenkonus zwischen diesem und dem Übergangsbereich zwischen dem Rohr-Ringwulst und einem achsparallelen Rohrende, oder unmittelbar axial zwischen dem Anschlußstutzen und dem Verschraubungsteil in einem den Ringwulst umschließenden Bereich.

Die US-A-3 393 930 beschreibt eine ähnliche Rohrverbindung, die alle Merkmale des Oberbegriffs des Anspruchs 1 offenbart, und zwar auch eine radiale, zur axialen Abstützung der Rohrleitung grundsätzlich geeignete Stufenfläche im Anschlußstutzen, wobei allerdings nach der Zeichnung die Rohrleitung nicht axial an der Stufenfläche im Anschlußstutzen abgestützt ist, sondern in ihrer montierten Lage mit einem achsparallelen, im Durchmesser reduzierten Ende mit axialem Abstand vor der Stutzen-Stufenfläche endet. Der Anschlußstutzen weist zudem eine innere, über eine radiale Stufe erweiterte Ausnehmung auf, in der ein das Rohrleitungsende umschließender Radialdichtring angeordnet ist.

Der vorliegenden Erfindung liegt die Aufgabe zugrunde, ausgehend von dem eingangs beschriebenen Stand der Technik eine Rohrverschraubung zu schaffen, die unter allen Betriebsbedingungen eine verbesserte, gleichbleibend optimale Dichtigkeit gewährleistet.

Erfindungsgemäß wird dies durch die Merkmale des kennzeichnenden Teils des Anspruchs 1 erreicht.

Demnach ist erfindungsgemäß die Rohrleitung im Bereich des Ringwulstes derart umgeformt, daß der Ringwulst auf seiner dem Anschlußstutzen zugekehrten Seite einen Schulterabschnitt mit einem zur Längsachse gemessenen, stumpfen Hinterschneidungswinkel größer 90° aufweist, so daß der Ringwulst an einer radialen Stirnfläche des Anschlußstutzens nur im radial äußeren Bereich mit einem im wesentlichen (kreis-) linienförmigen Anlagekontaktbereich zur Anlage gelangt. Dabei ist dann zweckmäßigerweise das freie Rohrende ausgehend von der axialen Lage des linienförmigen Anlagekontaktbereiches des Ringwulstes mit einer Länge ausgebildet, die derart kürzer als die zwischen der Stutzen-Stirnfläche und der inneren Stufenfläche gemessene Tiefe der Aufnahmeöffnung des Anschlußstutzens ist, daß in jedem Fall - auch bei in der Praxis auftretenden Längentoleranzen - ein direkter Anlagekontakt nur zwischen dem Ringwulst und der Stutzen-Stirnfläche in dem kreislinienförmigen Anlagekontaktbereich auftritt.

Vorzugsweise ist dabei zusätzlich vorgesehen, daß die Rohrleitung endseitig derart umgeformt ist, daß ihr freies, sich an den Ringwulst anschließendes, achsparalleles Rohrende einen gegenüber dem ursprünglichen Rohrdurchmesser reduzierten Enddurchmesser aufweist, so daß innerhalb der Aufnahmeöffnung des Anschlußstutzens radial zwischen diesem und dem Rohrende eine Dichtungskammer zur Aufnahme der elastischen Dichtung gebildet ist. Durch die Reduzierung des Durchmessers des Rohrendes erstreckt sich die Dichtungskammer vorteilhafterweise über die ganze axiale Länge der Stutzen-Aufnahmeöffnung, wobei die gesamte, so gebildete, vergrößerte Dichtungskammer mit elastisch verpreßtem Dichtungsmaterial ausgefüllt ist. Vorzugsweise ist dabei ein Abschnitt der Dichtung auch axial zwischen dem Rohrende und der Stutzen-Stirnfläche angeordnet, so daß eventuelle Längentoleranzen in diesem Breich durch die Elastizität der Dichtung ausgeglichen werden.

Die Erfindung beruht im wesentlichen auf der Erkenntnis, daß bei der eingangs beschriebenen bekannten Rohrverschraubung die Dichtungsprobleme hauptsächlich daraus resultieren, daß der dort vorhandene Dichtungsring in den meisten Fällen nicht oder nur unzureichend gekammert ist. Aufgrund von unvermeidbaren Längentoleranzen im Bereich des umgeformten Rohrendes kann in vielen Fällen der Ringwulst mit seiner radialen Anlageringfläche gar nicht an der Stutzen-Stirnfläche zur Anlage gelangen, weil die endseitige Rohr-Stirnfläche bereits im Stutzen auf der Stufenfläche axial abgestützt anliegt. Dadurch entsteht zwischen dem Anschlußstutzen und dem Rohr-Ringwulst ein Ringspalt, durch den der Dichtungsring vor allem bei starken impulsartigen Druckschwankungen beschädigt oder sogar "ausgewaschen" werden kann.

Durch die vorliegende Erfindung wird im Gegensatz dazu eine deutliche Verbesserung der Dichtwirkung erreicht. Aufgrund der - im Vergleich zum Stand der Technik - vergrößerten Dichtungskammer kann vorteilhafterweise eine vorgeformte Profildichtung verwendet werden, deren Form derart gewählt ist, daß sie im montierten Zustand unter elastischer Verpressung die gesamte Dichtungskammer ausfüllt. Dies stellt einen hohen Schutz gegen Undichtigkeiten dar. Durch den erfindungsgemäß stets gewährleisteten direkten.Anlagekontakt zwischen dem Rohr-Ringwulst und der Stutzen-Stirnfläche ist in diesem Bereich immer eine geschlossene Kammerung der Dichtung gewährleistet. Der im wesentlichen linienförmige Anlagekontaktbereich bewirkt dabei eine relativ hohe Flächenpressung, wodurch zusätzlich auch eine ergänzende metallische Dichtwirkung erreicht wird. Zusätzlich tritt der Vorteil auf, daß die erfindungsgemäße Ausgestaltung des Ringwulstes im Bereich des schrägen, hinterschnittenen Schulterabschnittes eine axiale elastische Längenverformung derart zuläßt, daß in jedem Fall - auch bei sehr ungünstigen Lähgentoleranzen - die beschriebene Dichtungskammerung erreicht wird.

Weitere vorteilhafte Ausgestaltungsmerkmale der Erfindung sind in den Unteransprüchen sowie der folgenden Beschreibung enthalten.

Anhand eines in der Zeichnung veranschaulichten, bevorzugten Ausführungsbeispiels soll die Erfindung genauer erläutert werden. Dabei zeigen:
- Fig. 1: einen Halb-Längsschnitt durch eine erfindungsgemäße Rohrverschraubung im montierten Zustand,
- Fig. 2: einen Längsschnitt analog zu Fig. 1 des umgeformten Rohrendes mit vormontierter elastischer Dichtung,
- Fig. 3: eine Schnittdarstellung nur des Rohrendes entsprechend Fig. 2 und
- Fig. 4: eine Schnittdarstellung der Dichtung entsprechend Fig. 2 in einer lagerichtigen Stellung relativ zu Fig. 3 zur Vormontage auf dem Rohrende durch axiales Aufsetzen.

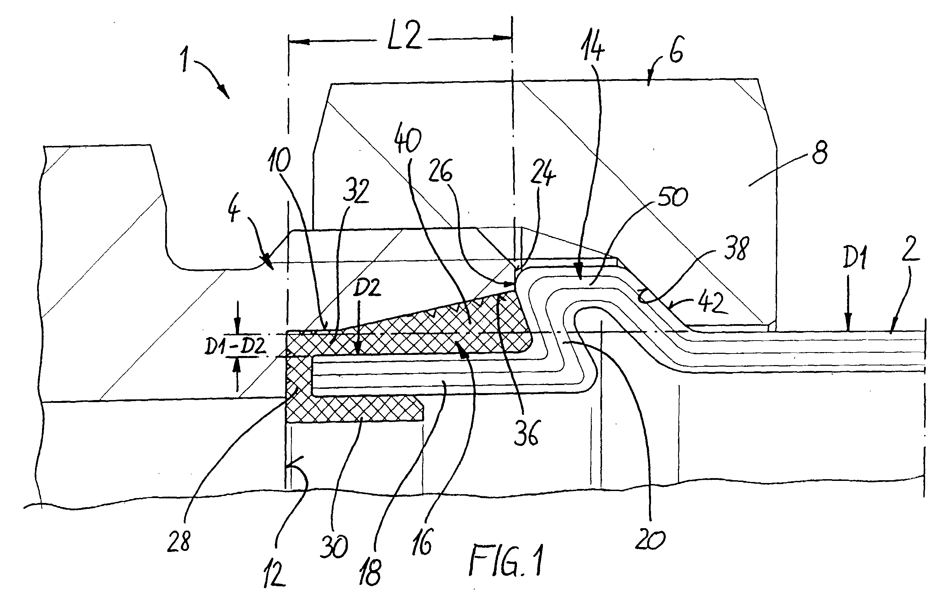

Wie sich zunächst aus Fig. 1 ergibt, dient eine erfindungsgemäße Rohrverschraubung 1 zum Anschluß einer insbesondere metallischen Rohrleitung 2. Die Rohrverschraubung 1 besteht hierzu aus einem Anschlußstutzen 4 und einem zum Halten der Rohrleitung 2 mit dem Anschlußstutzen 4 verschraubbaren, von der Rohrleitung durchgriffenen Überwurf-Verschraubungsteil 6. Im dargestellten, bevorzugten Ausführungsbeispiel weist der Anschlußstutzen 4 ein Außengewinde auf, und das Verschraubungsteil 6 ist als Überwurfmutter 8 ausgebildet und mit einem Innengewinde auf das Außengewinde des Anschlußstutzens 4 aufschraubbar. Der Anschlußstutzen 4 weist eine Aufnahmeöffnung 10 für die Rohrleitung 2 mit einer inneren radialen Stufenfläche 12 zur axialen Abstützung der Rohrleitung 2 auf. Die Rohrleitung 2 weist einen umfangsgemäßen, durch Stauchumformen gebildeten Ringwulst 14 auf, der zur formschlüssigen Halterung der Rohrleitung 2 zwischen dem Anschlußstutzen 4 und dem Verschraubungsteil 6 eingespannt gehalten wird. Zudem ist zwischen der Rohrleitung 2 und dem Anschlußstutzen 4 eine elastische Dichtung 16 angeordnet.

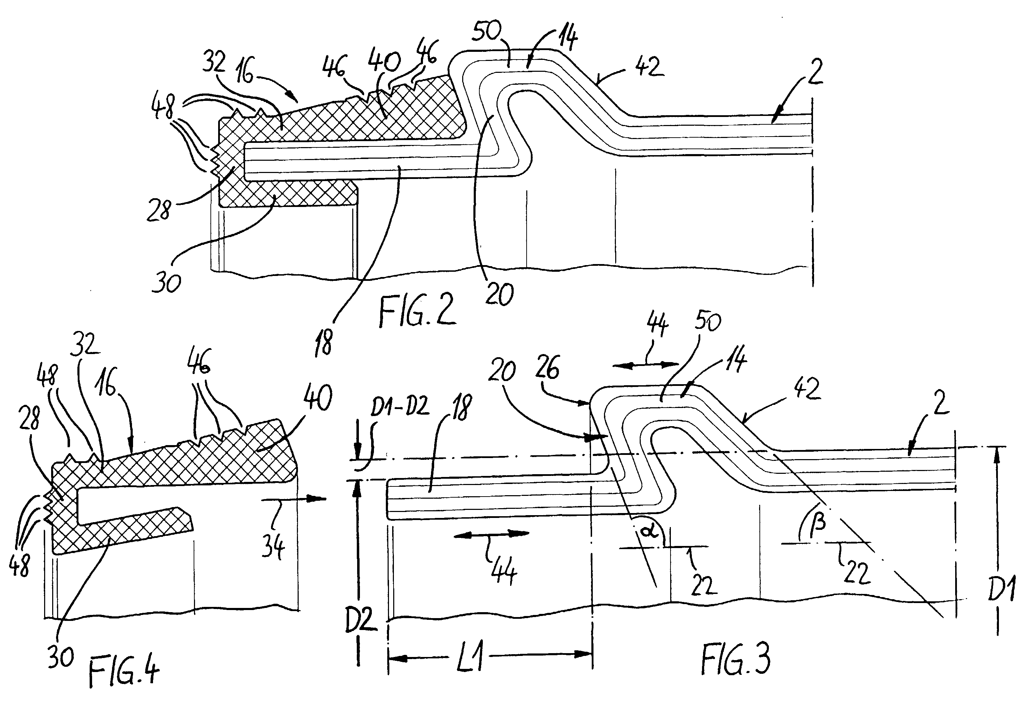

Erfindungsgemäß ist die Rohrleitung 2 außerdem im Bereich des Ringwulstes 14 derart umgeformt, daß der Ringwulst 14 auf seiner dem Anschlußstutzen 4 zugekehrten Seite einen schrägen Schulterabschnitt 20 mit einem zur Längsachse (in Fig. 3 durch dazu parallele Strichpunktlinien 22 angedeutet) gemessenen, stumpfen Hinterschneidungswinkel α < 90° aufweist. Dadurch gelangt der Ringwulst 14 erfindungsgemäß an einer radialen Stirnfläche 24 des Anschlußstutzens 4 ausschließlich im radial äußeren Bereich mit einem im wesentlichen kreislinienförmigen Anlagekontaktbereich 26 zur Anlage; siehe Fig. 1. In diesem Anlagekontaktbereich 26 erfolgt somit eine metallische Abdichtung der Dichtungskammer radial nach außen, so daß die Dichtung 16 effektiv gekammert ist.

In vorteilhafter Ausgestaltung der Erfindung ist die Rohrleitung 2 endseitig derart umgeformt, daß ein freies, sich an den Ringwulst 14 anschließendes, achsparalleles Rohrende 18 einen gegenüber dem ursprünglichen Rohrdurchmesser D1 reduzierten Enddurchmesser D2 aufweist, so daß innerhalb der Aufnahmeöffnung 10 des Anschlußstutzens 4 radial zwischen diesem und dem Rohrende 18 eine um die Durchmesser-Differenz D1 minus D2 vergrößerte Dichtungskammer zur Aufnahme der elastischen Dichtung 16 gebildet ist. Hierdurch kann vorteilhafterweise die Dichtung 16 ebenfalls entsprechend vergrößert sein, und zwar derart, daß sie unter elastischer Verpressung die gesamte erfindungsgemäß gebildete Dichtungskammer ausfüllt. Mit Vorteil handelt es sich bei der Dichtung 16 um ein vorgeformtes Formteil nach Art einer Profildichtung mit einer speziell an die Form der Dichtungskammer angepaßten Form.

In vorteilhafter Ausgestaltung der Erfindung ist die Dichtung 16 - siehe hierzu insbesondere auch Fig. 2 und 4 - abschnittsweise derart ringkappenförmig ausgebildet, daß sie auf das freie Rohrende 18 zumindest kraftschlüssig axial aufsetzbar ist und dann die Rohrwandung axial sowie radial innen und außen umschließt. Dieser vormontierte Zustand ist in Fig. 2 dargestellt, und Fig. 1 zeigt den montierten und verpreßten Zustand der Dichtung 16. Einzelheiten zu dieser vorteilhaften Maßnahme sind auch in der Gebrauchsmusteranmeldung 298 10 700.7 der Anmelderin enthalten, weshalb an dieser Stelle auf die genannte Gebrauchsmusteranmeldung in vollem Umfange Bezug genommen wird. Die Dichtung 16 weist somit einen im wesentlichen U-förmigen Ringabschnitt mit einem sich radial erstreckenden, axial zwischen der Stutzen-Stufenfläche 12 und dem Rohrende 18 anzuordnenden Dichtungsabschnitt 28 und zwei sich im wesentlichen axial sowie koaxial zueinander erstreckenden Ringabschnitten 30 und 32 zur kraftschlüssigen Anlage an der Rohrwandung auf. Die Dichtung 16 ist hierdurch einfach auf das Rohrende 18 stirnseitig axial aufsteckbar, was zwischen Fig. 4 und 3 durch einen Pfeil 34 angedeutet ist. Die Dichtung 16 sitzt dann kraftschlüssig und somit während der Rohrmontage praktisch unverlierbar (vormontiert) auf dem Rohrende 18. Um diesen Kraftschluß zu erreichen, erstreckt sich vorzugsweise der innere Ringabschnitt 30 im unmontierten, d. h. noch von der Rohrleitung 2 getrennten und daher unverformten Zustand (siehe Fig. 4) ausgehend von dem Dichtungsabschnitt 28 in einem spitzen Winkel schräg in Richtung des äußeren Ringabschnittes 32. Hierdurch wird eine Verengung des Aufnahmequerschnittes für das Rohrende 18 erzeugt, wobei der Schrägverlauf insbesondere des radial inneren Ringabschnittes 30 insofern von besonderem Vorteil ist, als dieser dann fest unter Vorspannung innen im Rohr an der Wandung anliegt. Dies ist vor allem bei größeren Strömungsgeschwindigkeiten eines durch die Rohrverschraubung 1 geführten Strömungsmediums vorteilhaft, da wegen der Anlagevorspannung ein Abheben des Ringabschnittes 30 von der Rohr-Innenwandung weitgehend ausgeschlossen ist.

In dem bevorzugten Ausführungsbeispiel ist der Anschlußstutzen 4 als Normteil einer üblichen Schneidringverschraubung ausgebildet, so daß er einen die Aufnahmeöffnung 10 zur Mündung hin erweiternden Innenkonus 36 aufweist. Vorzugsweise handelt es sich auch bei dem Verschraubungsteil 6 bzw. der Überwurfmutter 8 um ein Normteil mit einem Innenkonus 38 zur Anlage an dem Ringwulst 14 der Rohrleitung 2. Entsprechend den einschlägigen Normen handelt es sich bei dem Innenkonus 36 des Anschlußstutzens 4 um einen 24°-Konus und bei dem Innenkonus 38 der Überwurfmutter 8 um einen 45°-Konus.

Hierbei weist nun die Dichtung 16 einen entsprechend dem Innenkonus 36 des Anschlußstutzens 4 erweiternd geformten Dichtabschnitt 40 auf, der gemäß Fig. 1 gekammert zwischen dem Anschlußstutzen 4, dem im Durchmesser reduzierten Rohrende 18 und dem Ringwulst 14 unter elastischer Vorspannung angeordnet ist. Der bevorzugt vorgesehene U-förmige Dichtungs- abschnitt (28, 30, 32) geht mit dem äußeren Ringabschnitt 32 einstückig in den sich außenseitig konisch erweiternden Dichtabschnitt 40 über. Dabei ist die Dichtung 16 insgesamt so geformt, daß sie im montierten Zustand (Fig. 1) unter elastischer Verpressung innerhalb der Aufnahmeöffnung 10 den gesamten Zwischenraum axial und radial zwischen der Rohrleitung 2 bzw. dem Rohrende 18 und dem Anschlußstutzen 4 ausfüllt. Dies bedeutet, daß auch der Bereich der Hinterschneidung des Schulterabschnittes 20 von der Dichtung 16 ausgefüllt wird.

Es ist ferner bevorzugt vorgesehen, daß der Ringwulst 14 der Rohrleitung 2 auf seiner der Überwurfmutter 8 zugekehrten Seite in Anpassung an deren Innenkonus 38 eine Flankenfläche 42 aufweist, die zur flächigen Anlage in dem Innenkonus 38 mit einem entsprechend spitzen Winkel β schräg zur Längsachse 22 ausgerichtet ist (Fig. 3).

Wie sich weiterhin aus Fig. 1 und 3 ergibt, weist das freie Rohrende 18 ausgehend von der axialen Lage des linienförmigen Anlagekontaktbereiches 26 des Ringwulstes 14 eine Länge L1 auf, die derart kürzer als die zwischen der Stutzen-Stirnfläche 24 und der inneren Stufenfläche 12 gemessene Tiefe L2 der Aufnahmeöffnung 10 des Anschlußstutzens 4 ist, daß der axial zwischen der Stufenfläche 12 und einer endseitigen Stirnfläche des Rohrendes 18 angeordnete radiale Dichtungsabschnitt 28 der bevorzugt vorgesehenen ringkappenförmigen Dichtung 16 definiert elastisch verpreßt wird. In diesem Zusammenhang ist von Bedeutung, daß die Rohrleitung 2 aufgrund der erfindungsgemäßen speziellen Umformung im Bereich des Ringwulstes 14 in axialer Richtung geringfügig elastisch verformbar ist, was in Fig. 3 durch zwei Doppelpfeile 44 veranschaulicht ist. Dabei bewirkt der Ringwulst 14 in seinem zwischen dem Anschlußstutzen 4 und dem Verschraubungsteil 6 eingespannten Zustand eine Anzugsbegrenzung.

Wie sich noch aus Fig. 2 und 4 ergibt, weist die bevorzugt als einstückiges Profilteil aus elastischem Material gebildete Dichtung 16 auf ihren Dichtflächen eine bestimmte Profilierung auf, insbesondere in Umfangsrichtung verlaufende Rillen 46 und/oder Stege 48, derart, daß labyrinthdichtungsartige Zonen gebildet werden. Vorzugsweise sind auf einer vorderen axialen Stirnfläche sowie einer radial nach außen weisenden Umfangsfläche Stege 48 gebildet, während auf der sich konisch erweiternden Außenfläche des Dichtabschnittes 40 Rillen 46 vorhanden sind.

Es sei noch erwähnt, daß durch den im wesentlichen linienförmigen Anlagekontaktbereich 26 und die dadurch bewirkte, relativ hohe Flächenpressung vorteilhafterweise auch ein Mitdrehen der Rohrleitung 2 beim Verschrauben vermieden wird. Die Anzugsbegrenzung wird hauptsächlich von einem im wesentlichen zylindrischen, äußeren Abschnitt 50 des Ringwulstes 14 bewirkt. Zwischen diesem Abschnitt 50 und dem schrägen Schulterabschnitt 20 ist ein Radius gebildet, durch den im Grunde der nur linienförmige Anlagekontaktbereich 26 entsteht. Die Durchmesser-Reduzierung D1 minus D2 liegt bei den meisten realisierten Ausführungsformen - je nach Größe bzw. Nennweite der Verschraubung 1 - im Bereich von etwa 1 mm.

Die erfindungsgemäße Rohrverschraubung 1 ist aufgrund der Erfindung für metallische Rohrleitungen im Hoch- und Höchstdruckbereich geeignet und dabei nahezu unempfindlich für eventuelle Montagefehler. Aufgrund der erfindungsgemäßen Dichtung und deren spezieller Kammerung wird stets eine optimale Abdichtung gewährleistet, wenn die Montage bis zur Anzugsbegrenzung (Blockmontage) erfolgt. Dies bedeutet, daß vorteilhafterweise die Dichtwirkung unabhängig von dem Anzugsdrehmoment der Verschraubung ist; es muß lediglich gewährleistet sein, daß der Ringwulst 14 zwischen den Verschraubungsteilen eingespannt ist.

## Patentansprüche

1. Rohrverschraubung (1) mit einer anschließbaren, insbesondere metallischen. Rohrleitung (2), bestehend aus einem Anschlußstutzen (4) und einem zum Halten der Rohrleitung (2) mit dem Anschlußstutzen (4) verschraubbaren Überwurf-Verschraubungsteil (6), wobei der Anschlußstutzen (4) eine Aufnahmeöffnung (10) für die Rohrleitung (2) mit einer radialen Stufenfläche (12) zur axialen Abstützung der Rohrleitung (2) aufweist, wobei die Rohrleitung (2) einen umfangsgemäß nach außen ragenden, durch Stauchumformen gebildeten Ringwulst (14) aufweist, der zur formschlüssigen Halterung der Rohrleitung (2) zwischen dem Anschlußstutzen (4) und dem Verschraubungsteil (6) gehalten ist, und wobei zwischen der Rohrleitung (2) und dem Anschlußstutzen (4) eine elastische Dichtung (16) angeordnet ist,
**dadurch gekennzeichnet, dass** die Rohrleitung (2) im Bereich des Ringwulstes (14) derart umgeformt ist, dass der Ringwulst (14) auf seiner dem Anschlußstutzen (4) zugekehrten Seite einen Schulterabschnitt (20) mit einem zur Längsachse (22) gemessenen, stumpfen Hinterschneidungswinkel (α) größer 90° aufweist, so dass der Ringwulst (14) an einer radialen Stirnfläche (24) des Anschlußstutzens (4) nur mit einem nahezu linienförmigen Anlagekontaktbereich (26) zur Anlage gelangt.

2. Rohrverschraubung nach Anspruch 1,
**dadurch gekennzeichnet, dass** die Rohrleitung (2) endseitig derart umgeformt ist, dass ihr freies, sich an den Ringwulst (14) anschließendes, achsparalleles Rohrende (18) einen gegenüber dem ursprünglichen Rohrdurchmesser (D1) reduzierten Enddurchmesser (D2) aufweist, so dass innerhalb der Aufnahmeöffnung (10) des Anschlußstutzens (4) radial zwischen diesem und dem Rohrende (18) eine Dichtungskammer zur Aufnahme der elastischen Dichtung (16) gebildet ist.

3. Rohrverschraubung nach Anspruch 1 oder 2,
**dadurch gekennzeichnet, dass** die Dichtung (16) derart ringkappenförmig ausgebildet ist, dass sie auf das freie Rohrende (18) zumindest kraftschlüssig aufsetzbar ist und die Rohrwandung axial sowie radial innen und außen umschließt.

4. Rohrverschraubung nach einem der Ansprüche 1 bis 3,
**dadurch gekennzeichnet, dass** der Anschlußstutzen (4) als Normteil mit einem die Aufnahmeöffnung (36) erweiternden Innenkonus (36) ausgebildet ist.

5. Rohrverschraubung nach einem der Ansprüche 1 bis 4,
**dadurch gekennzeichnet, dass** das Verschraubungsteil (6) als Norm-Überwurfmutter (8) mit einem Innenkonus (38) zur Anlage an dem Ringwulst (14) der Rohrleitung (2) ausgebildet ist.

6. Rohrverschraubung nach Anspruch 4 oder 5,
**dadurch gekennzeichnet, dass** die Dichtung (16) einen entsprechenden dem Innenkonus (36) des Anschlußstutzens (4) erweiternd geformten Dichtabschnitt (40) aufweist, der gekammert zwischen dem Anschlußstutzen (4), dem im Durchmesser reduzierten Rohrende (18) und dem Ringwulst (14) unter elastischer Vorspannung angeordnet ist.

7. Rohrverschraubung nach Anspruch 5 oder 6,
**dadurch gekennzeichnet, dass** der Ringwulst (14) der Rohrleitung (2) auf seiner der Überwurfmutter (8) zugekehrten Seite eine Flankenfläche (42) aufweist, die zur flächigen Anlage in dem Innenkonus (38) der Überwurfmutter (8) mit einem entsprechenden spitzen Winkel (β) schräg zur Längsachse (22) ausgerichtet ist.

8. Rohrverschraubung nach einem der Ansprüche 1 bis 7,
**dadurch gekennzeichnet, dass** das freie Rohrende (18) ausgehend von der axialen Lage des linienförmigen Anlagekontaktbereiches (26) des Ringwulstes (14) eine Länge (L1) aufweist, die derart kürzer als die zwischen der Stutzen-Stirnfläche (24) und der inneren Stufenfläche (12) gemessenen Tiefe (L2) der Aufnahmeöffnung (10) des Anschlußstutzens (4) ist, dass ein axial zwischen der Stufenfläche (12) und dem Rohrende (18) angeordneter Abschnitt (28) der Dichtung (16) definiert elastisch verpresst wird.

9. Rohrverschraubung nach einem der Ansprüche 1 bis 8,
**dadurch gekennzeichnet, dass** der Ringwulst (14) der Rohrleitung (2) in seinem zwischen dem Anschlußstutzen (4) und dem Verschraubungsteil (6) eingespannten Zustand eine Anzugsbegrenzung bewirkt.

10. Rohrverschraubung nach einem der Ansprüche 1 bis 9,
**dadurch gekennzeichnet, dass** die Dichtung (16) als einstückiges Profilformteil aus elastischem Material ausgebildet ist und auf ihren Dichtflächen in Umfangsrichtung verlaufende Rillen (46) und/oder Stege (48) zur Bildung von labyrinthdichtungsartigen Zonen aufweist.

## Claims

1. Screwed pipe connection (1) with a connectable, in particular metal, conduit (2), consisting of a connecting branch (4) and a union screw connection part (6), which can be screwed to the connecting branch (4) to hold the conduit (2), wherein the connecting branch (4) has a receiving orifice (10) for the conduit (2) with a radial stepped face (12) for axial support of the conduit (2), the conduit (2) having a torus (14), projecting outwards peripherally and formed by changing shape by upsetting, which is held between the connecting branch (4) and the screw connection part (6) for form-locking holding of the conduit (2), and wherein an elastic seal (16) is arranged between the conduit (2) and the connecting branch (4), **characterised in that** the shape of the conduit (2) is changed in the area of the torus (14) in such a way that the torus (14) has on its side facing the connecting branch (4) a shoulder section (20) with an obtuse reentrant angle (α) larger than 90° measured to the longitudinal axis (22), so the torus (14) comes to rest on a radial front face (24) of the connecting branch (4) with only an almost linear resting contact area (26).

2. Screwed pipe connection according to claim 1, **characterised in that** the conduit (2) is changed in shape on its end in such a way that its open pipe end (18) adjoining the torus (14) and parallel to the axis has a reduced final diameter (D2) compared to the original pipe diameter (D1), so inside the receiving orifice (10) of the connecting branch (4) a seal chamber is formed radially between it and the pipe end (18) for receiving the elastic seal (16)

3. Screwed pipe connection according to claim 1 or 2, **characterised in that** the seal (16) is constructed in the shape of a ring-cap in such a way that it can be placed on to the open pipe end (18) at least by force locking and surrounds the pipe wall internally and externally both axially and radially.

4. Screwed pipe connection according to one of claims 1 to 3, **characterised in that** the connecting branch (4) is constructed as a standard part with an inner cone (36) extending the receiving orifice (36).

5. Screwed pipe connection according to one of claims 1 to 4, **characterised in that** the screw connection part (6) is constructed as a standard union nut (8) with an inner cone (38) for resting against the torus (14) of the conduit (2).

6. Screwed pipe connection according to claim 4 or 5, **characterised in that** the seal (16) has a sealing section (40), formed to extend corresponding to the inner cone (36) of the connecting branch (4) and arranged under elastic bias in a chamber between the connecting branch (4), the pipe end (18) which is reduced in diameter and the torus (14).

7. Screwed pipe connection according to claim 5 or 6, **characterised in that** the torus (14) of the conduit (2) has on its side facing the union nut (8) a flank face (42) which is aligned at a corresponding acute angle (β) diagonally to the longitudinal axis (22) to rest flat in the inner cone (38) of the union nut (8).

8. Screwed pipe connection according to one of claims 1 to 7, **characterised in that** the open pipe end (18) starting from the axial position of the linear resting contact area (26) of the torus (14) has a length (L1) which is shorter than the depth (L2) of the receiving orifice (10) of the connecting branch (4) measured between the front face (24) of the connecting branch and the inner stepped face (12) such that a section (28) of the seal (16) arranged between the stepped face (12) and the pipe end (18) is elastically compressed in a defined manner.

9. Screwed pipe connection according to one of claims 1 to 8, **characterised in that** the torus (14) of the conduit (2) effects a tightening limit in its state clamped between the connecting branch (4) and the screw connection part (6).

10. Screwed pipe connection according to one of claims 1 to 9, **characterised in that** the seal (16) is constructed as a one-piece profiled moulded part made of elastic material and has on its sealing faces grooves (46) and/or webs (48) running in the peripheral direction for forming zones in the manner of labyrinth seals.

## Revendications

1. Raccord à vis (1) avec une tuyauterie (2), en particulier métallique, pouvant être raccordée, comprenant une tubulure de raccordement (4) et une pièce de boulonnage à chapeau (6) pouvant être vissée avec la tubulure de raccordement (4) pour maintenir la tuyauterie (2), la tubulure de raccordement (4) présentant une ouverture de logement (10) pour la tuyauterie (2) avec une surface étagée radiale (12) pour supporter la tuyauterie (2) dans le sens axial, ladite tuyauterie (2) présentant un bourrelet annulaire (14) formé par refoulement, dépassant vers l'extérieur sur la périphérie, qui est maintenu entre la tubulure de raccordement (4) et la pièce de boulonnage (6) pour maintenir la tuyauterie (2) de manière solidaire avec correspondance de forme et un joint élastique (16) étant disposé entre la tuyauterie (2) et la tubulure de raccordement (4), **caractérisé en ce que** la tuyauterie (2) est formée dans la zone du bourrelet annulaire (14) de façon que ledit bourrelet annulaire (14) présente, de son côté tourné vers la tubulure de raccordement (4), un segment d'épaulement (20) avec un angle de contre-dépouille (α) obtus supérieur à 90°, mesuré par rapport à l'axe longitudinal (22), de telle façon que le bourrelet annulaire (14) vient reposer contre une surface frontale radiale (24) de la tubulure de raccordement (4) avec seulement une zone de contact pratiquement linéaire (26).

2. Raccord à vis selon la revendication 1, **caractérisé en ce que** la tuyauterie (2) est formée côté extrémité de façon que son extrémité libre (18) parallèle à l'axe, faisant suite au bourrelet annulaire (14), présente un diamètre d'extrémité (D2) réduit par rapport au diamètre de tuyau d'origine (D1), de sorte qu'une chambre d'étanchéité destinée à loger le joint élastique (16) est formée à l'intérieur de l'ouverture de logement (10) de la tubulure de raccordement (4) dans le sens radial, entre ladite tubulure et l'extrémité du tuyau (18).

3. Raccord à vis selon la revendication 1 ou 2, **caractérisé en ce que** le joint (16) est prévu en forme de chapeau annulaire de façon à pouvoir être posé au moins de manière solidaire par une liaison dynamique sur l'extrémité libre du tuyau (18) et entoure la paroi du tuyau dans le sens axial et radial, à l'intérieur et à l'extérieur.

4. Raccord à vis selon l'une des revendications 1 à 3, **caractérisé en ce que** la tubulure de raccordement (4) est formée comme une pièce standard avec un cône intérieur (36) élargissant l'ouverture de logement (36).

5. Raccord à vis selon l'une des revendications 1 à 4, **caractérisé en ce que** la pièce de boulonnage (6) est formée comme un écrou à chapeau standard (8) avec un cône intérieur destiné à reposer contre le bourrelet annulaire (14) de la tuyauterie (2).

6. Raccord à vis selon la revendication 4 ou 5, **caractérisé en ce que** le joint (16) présente un segment d'étanchéité (40) formé en s'élargissant de manière correspondant au cône intérieur (38) de la tubulure de raccordement (4), ledit joint étant disposé avec une prétension élastique en formant un compartiment entre la tubulure de raccordement (4), l'extrémité du tuyau (18) de diamètre réduit et le bourrelet annulaire (14).

7. Raccord à vis selon la revendication 5 ou 6, **caractérisé en ce que** le bourrelet annulaire (14) de la tuyauterie (2) présente, de son côté tourné vers l'écrou à chapeau (8), une surface de flanc (42) qui, pour créer un contact de surface dans le cône intérieur (38) de l'écrou à chapeau (8), est orientée à l'oblique par rapport à l'axe longitudinal (22) avec un angle aigu correspondant (β).

8. Raccord à vis selon l'une des revendications 1 à 7, **caractérisé en ce que** l'extrémité libre de tuyau (18) présente, à partir de la position axiale de la zone de contact linéaire (26) du bourrelet annulaire (14), une longueur (L1) qui est plus courte que la profondeur ( L2) de l'ouverture de logement (10) de la tubulure de raccordement (4) mesurée entre la surface frontale de la tubulure (24) et la surface étagée intérieure (12), de sorte qu'un segment (28) du joint (16) disposé dans le sens axial entre la surface étagée (12) et l'extrémité du tuyau (18) est comprimé élastiquement de manière définie.

9. Raccord à vis selon l'une des revendications 1 à 8, **caractérisé en ce que** le bourrelet annulaire (14) de la tuyauterie (2) provoque une limitation de serrage lorsqu'il est enserré entre la tubulure de raccordement (4) et la pièce de boulonnage (6).

10. Raccord à vis selon l'une des revendications 1 à 9, **caractérisé en ce que** le joint (16) est prévu comme une pièce profilée d'un seul tenant en matériau élastique et présente sur ses faces d'étanchéité des rainures (46) orientées dans le sens périphérique et/ou des nervures (48) destinée à former des zones en forme de labyrinthes.
